# EUROPÄISCHE PATENTSCHRIFT

(11) **EP 3 467 597 B1**
(45) Veröffentlichungstag und Bekanntmachung des Hinweises auf die Patenterteilung: **09.09.2020**
(21) Anmeldenummer: 18198532.6
(22) Anmeldetag: 04.10.2018
(51) Int. Cl.: G05B 15/02, G05B 19/042, G06Q 10/06

(54) **VERFAHREN UND SYSTEM ZUR INBETRIEBNAHME UND/ODER WARTUNG EINES REGEL- UND STEUERGERÄTES FÜR FELDGERÄTE FÜR EINE GEBÄUDEAUTOMATISIERUNG**
METHOD AND SYSTEM FOR COMMISSIONING AND/OR THE MAINTENANCE OF A CONTROL DEVICE FOR FIELD DEVICES FOR AUTOMATION OF BUILDINGS
PROCÉDÉ ET SYSTÈME DE MISE EN SERVICE ET / OU DE MAINTIEN D'UN APPAREIL DE RÉGLAGE ET DE COMMANDE POUR APPAREILS DE TERRAIN POUR UNE AUTOMATISATION DE BÂTIMENTS

(30) Priorität: 06.10.2017 DE 102017217760
(43) Veröffentlichungstag der Anmeldung: 10.04.2019
(73) Patentinhaber: Siemens Schweiz AG, 8047 Zürich (CH)
(72) Erfinder: Gollackner, Thomas, 6315 Oberägeri (CH)
(74) Vertreter: Maier, Daniel Oliver

(56) Entgegenhaltungen:
- EP-A1- 2 908 469
- EP-A1- 3 206 174
- WO-A1-2016/034236
- DE-A1-102012 009 438

## Beschreibung

Die Erfindung betrifft ein Verfahren und eine Anordnung zur Inbetriebnahme und/oder Wartung eines Regel- und Steuergerätes für Feldgeräte für eine Gebäudeautomatisierung

Die Inbetriebnahme bzw. die Wartung von Regel- und Steuergeräten (z.B. Controller) bei einer Gebäudeautomatisierung z.B. für Heizung-, Lüftung- oder Klimafunktionalität (HLK) wird heutzutage oft unzureichend dokumentiert. Insbesondere erfolgt bei der Inbetriebnahme oder bei einer Fehlerbehebung dieser Geräte oft eine unzureichende bzw. lückenhafte Dokumentation, insbesondere Testdokumentation. Auch ist die Projektfortschrittsverfolgung bei der Inbetriebnahme von HLK-Produkten in Gebäuden oft intransparent für den verantwortlichen Projektleiter.

Die europäische Patentanmeldung EP3206174A1 offenbart ein Verfahren und eine entsprechende Anordnung zur Inbetriebnahme eines Gebäudeautomatisierungssystems für ein Gebäude, wobei ein im Gebäude verbautes oder zu verbauendes Gerät einen Identifizierungscode mit für das Gerät gerätespezifischen Daten umfasst, wobei der Identifizierungscode durch ein mobiles Kommunikationsendgerät eines Benutzers erfasst wird, wobei auf einem Display des mobilen Kommunikationsendgerätes ein Gebäudeplan für das Gebäude angezeigt wird, wobei durch eine Benutzereingabe am mobilen Kommunikationsendgerät eine Zuordnung des verbautes oder zu verbauenden Gerätes zu einem Ort des Gebäudeplanes und/oder zu anderen verbauten oder zu verbauenden Geräten im Gebäudeplan erfolgt, wobei die Zuordnung im Gebäudeautomatisierungssystem hinterlegt wird.

Die europäische Patentanmeldung EP2908469A1 offenbart ein Gebäudeinbetriebnahmesystem mit einer Steuerung und einer Datenbank zur Speicherung eines Gebäudelayout, das die gewünschten Positionen für Geräte enthält, die im Gebäude montiert werden sollen. Das System beinhaltet eine portable drahtlose Einheit mit einem Display zur Verwendung durch einen Installateur. Das Display auf der tragbaren drahtlosen Einheit zeigt eine grafische Darstellung des Gebäudelayouts für einen durch einen Installateur ausgewählten Bereich, um die gewünschten Positionen für die zu montierenden Geräte (z.B. Beleuchtungskörper oder Wandschalter) grafisch zu veranschaulichen. Bei der Installation eines Gerätes an einem gewünschten Standort, erhält der Installateur eine eindeutige Kennung für ein installiertes Gerät, die mit dem entsprechenden Einbauort abgestimmt ist.

Der Fortschritt der Inbetriebnahme wird heutzutage mit Hilfe eines Inbetriebnahmetools am Notebook oder mittels Datenpunktlisten auf Papier dokumentiert. Problembeschreibungen werden hauptsächlich als Text eingegeben, oft ist der eingegebene Text bruchstückhaft. Die Dokumentation der Inbetriebnahme oder einer Wartungstätigkeit erfolgt individuell und manuell vom jeweiligen Inbetriebnahme- oder Servicetechniker. Die Dokumentation von Tätigkeiten im Feld ist somit oft lückenhaft und für eine dritte Person oft nur schwer und aufwendig nachvollziehbar.

Es ist daher die Aufgabe der vorliegenden Erfindung ein Verfahren und eine Anordnung zur effizienten Inbetriebnahme und/oder Wartung eines Regel- und Steuergerätes für Feldgeräte für eine Gebäudeautomatisierung bereitzustellen.

Die Aufgabe wird gelöst durch ein Verfahren zur Inbetriebnahme und/oder Wartung eines Regel- und Steuergerätes (z.B. Controller) für Feldgeräte (z.B. Aktor, Sensor, Stellglieder) für eine Gebäudeautomatisierung,
wobei zwischen dem Regel- und Steuergerät (Controller) und einem mobilen Kommunikationsendgerät (z.B. Smartphone, Tablet-Computer) eines Benutzers (z.B. Servicetechniker) eine Kommunikationsverbindung erstellt wird;
wobei das mobile Kommunikationsendgerät dazu eingerichtet ist, über die Kommunikationsverbindung einen Identifikationscode (z.B. ID, eindeutige Adresse), aktuelle Konfigurationsdaten und aktuelle Datenpunkte des Regel- und Steuergerätes (Controller) abzufragen, wobei ein Datenpunkt den Zustand eines Parameters eines an das Regel- und Steuergerät angeschlossenen Feldgerätes repräsentiert;
wobei das mobile Kommunikationsendgerät weiter dazu eingerichtet ist, über eine weitere Kommunikationsverbindung mit einer zentralen Stelle zu kommunizieren (z.B. Server in Cloud-Infrastruktur), wobei in der zentralen Stelle ein BIM-Modell (Gebäudeinformationsmodell, Building Information Model) des entsprechenden Gebäudes hinterlegt ist;
wobei über den Identifikationscode die aktuellen Daten (dynamische Prozessdaten und/oder statische Konfigurationsdaten) des Regel- und Steuergerätes mit den im BIM-Modell hinterlegten Daten des Regel- und Steuergerätes in Beziehung gesetzt werden; und
wobei das mobile Kommunikationsendgerät dazu eingerichtet ist (z.B. durch eine installierte App) für den Benutzer, basierend auf den aktuellen Konfigurationsdaten, den aktuellen Datenpunkten, den im BIM-Modell hinterlegten Daten des Regel- und Steuergerätes, dediziert Handlungsanweisungen (z.B. für eine Fehlerbehebung oder für eine benötigte / empfohlene Wartungsmassnahme) bereitzustellen, wobei der Verbauungsort des Regel- und Steuergerätes in einem Gebäude durch ein entsprechendes Positionssignal dem mobilen Kommunikationsendgerät mitgeteilt wird,
wobei das Positionssignal vom Regel- und Steuergerät ausgesendet wird,
wobei die dedizierten Handlungsanweisungen auf dem mobilen Kommunikationsendgerät des Benutzers als Folge von Anweisungen für an das Regel- und Steuergerät angeschlossene Feldgeräte abgearbeitet werden, wobei Messwerte von Sensoren, die datentechnisch am Regel- und Steuergerät angeschlossen sind, als Ergebnis der Anweisungen für die Feldgeräte durch das mobile Kommunikationsendgerät erfasst werden, wobei, basierend auf den Messwerten der Sensoren, weitere Handlungsanweisungen für den Benutzer auf dem mobilen Kommunikationsendgerät bereitgestellt werden. Mobile Kommunikationsendgeräte (z.B. Smartphones, Tablet-Computer) sind heutzutage weitverbreitet und mit leistungsfähigen Prozessoren und Speichern ausgestattet. Mit mobilen Kommunikationsendgeräten sind Kommunikationsverbindungen mit entsprechend ausgestatteten Regel- und Steuergeräten (z.B. Controller) oder mit zentralen Stellen (z.B. Leitstelle, Gebäudeleitstelle, Gebäudemanagementsystem, Server) leicht herstellbar, z.B. über WLAN, Bluetooth oder Internet. Das mobile Kommunikationsendgerät ist über ein installiertes Softwareprogramm (z.B. App) dazu eingerichtet, über die Kommunikationsverbindung Datenpunkte des Regel- und Steuergerätes abzufragen und auf ihren jeweiligen Zustand zu überprüfen. Die entsprechende App (d.h. das Softwareprogramm) wird z.B. über eine URL vom Internet (Android: Play Store, iOS: AppStore) auf das mobile Kommunikationsendgerät installiert. In der zentralen Stelle können die übertragenen Datenpunkte weiter analysiert werden, insbesondere kann der Projektfortschritt bei der Inbetriebnahme der Regel- und Steuergeräte protokolliert und nachvollzogen werden und der Fortschritt überprüft werden. Weiterhin können in der zentralen Stelle basierend auf den vom mobilen Kommunikationsendgerät gesendeten aktuellen Konfigurationsdaten und den aktuellen Datenpunkten, das BIM-Modell aktualisiert werden. Mit Vorteil ist das BIM-Modell (Building Information Model, Gebäudeinformationsmodell) mit einer geeigneten Datenstruktur in einem Speicher oder einer Datenbank der zentralen Stelle (z.B. Server eines Gebäudeautomatisierungssystems) abgelegt. Bei einem BIM-Modell handelt es sich um ein Gebäudemodell, das von allen an einem Gebäudeprojekt Beteiligten (Architekten, Ingenieure, Brandschutzfachleute, Baubehörden, HLK-Ingenieuren, Facility-Management-Fachleute) während der Planungs-, Bau- und Betriebsphase eines Gebäudes nutzbar ist.
Im BIM-Modell (Gebäudemodell) sind alle relevanten Gebäudedaten digital erfasst, kombiniert und vernetzt. Das BIM-Modell ist somit ein virtuelles Modell des Gebäudes und der im Gebäude verbauten Gewerke. Ein entsprechend gepflegtes BIM-Modell stellt die Aktualität der im Gebäude verbauten Gewerke und deren Beziehungen sicher. Mit Vorteil basiert ein BIM-Modell auf den standardisierten "Industrie Foundation Classes" (IFC). Mit Vorteil umfasst das BIM-Modell u.a. den Verbauungsort der in einem Gebäude befindlichen Gewerke (z.B. HLK-Systeme für Heizung, Lüftung oder Kühlung).

Ein Datenpunkt ist insbesondere eine Bezeichnung für eine Eingabe- oder Ausgabefunktion bestehend aus allen zugeordneten Informationen (welche den Aktualwert und/oder Zustand und Parameter (Eigenschaften und Attribute), z. B. Signalart und Signalkennlinie, Messbereich, Einheit und Zustandstexte umfassen), welche ihre Bedeutung (Semantik) vollständig beschreiben und die über eine Datenpunktadresse und/oder eine Benutzeradresse, identifiziert wird. Mit Vorteil wird ein Datenpunkt mit Etiketten (tags) versehen, um die Semantik und/oder die Verwendung und/oder die Funktion in der HLK-Anlage (Heizung-Lüftung-Kühlungs-Anlage) und/oder den Einbauort in der Anlage zu beschrieben. So können z.B. Deep Learning-Verfahren unterstützt werden und Data Analytics-Verfahren effektiv und effizient durchgeführt werden.

Unter Inbetriebnahme wird insbesondere das Einstellen eines Systems, einer Anlage oder Maschine verstanden. D.h. insbesondere Maßnahmen und Handlungen (z. B. Konfiguration, Parametrierung, Optimierung und Test), die notwendig sind, um eine Maschine oder Anlage betriebsbereit bzw. einsatzbereit zu machen. Eine Inbetriebnahme umfasst Maßnahmen und Tätigkeiten, die nach der Montage der Hardware bzw. nach der Installation der Software zur Einrichtung und Prüfung des Produkts/Systems durchgeführt werden.

Unter einem Feldgerät werden insbesondere Sensoren und Aktoren verstanden. Zustände der Feldgeräte werden im Regel- und Steuergerät (z.B. Controller) auf entsprechende Datenpunkte abgebildet. Mit Vorteil sind die Aktoren mit zusätzlichen Sensoren ausgestattet, um den Zustand bzw. eine Rückmeldung vom Prozess im Controller und in den Handlungsanweisungen zu bestimmen und eine Diagnose bei einem Fehlverhalten zu unterstützen.

Durch die Intelligenz (z.B. Prozessorleistung, Speicher, Software (installierte App)) auf dem mobilen Kommunikationsendgerät und den im BIM-Modell hinterlegten Daten bezüglich des entsprechenden Regel- und Steuergerätes werden, basierend auf den aktuellen Konfigurationsdaten und den aktuellen Datenpunkten des entsprechenden Regel- und Steuergerätes, für einen Servicetechniker im Feld für eine aktuell vorliegende Situation (z.B. Behebung eines Fehlerfalles) dediziert Handlungsanweisungen bereitgestellt.

Ein weiterer Vorteil der Erfindung liegt in einer vorausschauenden Bereitstellung von Ersatzteilen für die Behebung von Fehlern basierend auf dem Fehlerbild und/oder der Rückmeldung von Sensoren sodass der Servicetechniker das fehlerhafte Gerät austauschen kann.

Der eindeutige Identifikationscode wird als Brücke bzw. als Referenzierungsmechanismus zwischen den aktuellen Daten des Regel- und Steuergerätes und den im BIM-Modell hinterlegten Daten bezüglich des Regel- und Steuergerätes verwendet.

Eine erste vorteilhafte Ausgestaltung der Erfindung liegt darin, dass die dedizierten Handlungsanweisungen zusätzlich basierend auf einer Fehlermeldung des Regel- und Steuergerätes bereitgestellt werden. Dadurch können die Handlungsanweisungen noch gezielter bereitgestellt werden, denn die Handlungsanweisungen basieren auf einer aktuell vorliegenden Fehlermeldung zu deren Fehlerbehebung. Mit Vorteil wurden die bereitgestellten Handlungsanweisungen in der Vergangenheit schon einmal oder öfters zur Behebung desgleichen Fehlers verwendet. Die Handlungsanweisungen können auch auf einer Fehler-Ursachen-Analyse und/oder auf Verfahren der künstlichen Intelligenz (z.B. Selbstlernende Systeme, Neuronale Netze, Deep Learning) beruhen, mit Vorteil basierend auf semantischer Information oder Etiketten (tags). Die Fehler-Ursachen-Analyse und die Verfahren der künstlichen Intelligenz können auf dem mobilen Kommunikationsendgerät und/oder der zentralen Stelle (z.B. Server in Cloud) ablaufen.

Eine weitere vorteilhafte Ausgestaltung der Erfindung liegt darin, dass die dedizierten Handlungsanweisungen zusätzlich basierend auf einer Historienanalyse für das Regel- und Steuergerätes bereitgestellt werden. Basierend auf einer Historienanalyse früherer Ereignisse und Fälle (z.B. Fehlerfälle) können die Handlungsanweisungen immer zielgerichteter gegeben werden. Mit Vorteil werden für die Historienanalyse Methoden der Mustererkennung und/oder des Deep Learning verwendet.

Durch Deep Learning (tiefgehendes Lernen) können Muster z.B. sehr schnell erkannt werden. Die Daten für die Historienanalyse können vom Regel- und Steuergerät und/oder aus dem BIM stammen.

Ein weiterer Vorteil der Erfindung liegt darin, dass die dedizierten Handlungsanweisungen auf dem mobilen Kommunikationsendgerät (z.B. Smartphone) des Benutzers als Folge von Anweisungen für Feldgeräte, insbesondere Aktoren, abgearbeitet werden, wobei Messwerte von Sensoren, die datentechnisch am Regel- und Steuergerät (z.B. Controller) angeschlossen sind, als (insbesondere unmittelbares) Ergebnis der Anweisungen für die Feldgeräte durch das mobile Kommunikationsendgerät erfasst werden, wobei, basierend auf den Messwerten der Sensoren, weitere Handlungsanweisungen für den Benutzers auf dem mobilen Kommunikationsendgerät bereitgestellt werden. Dadurch ist es möglich die entsprechenden Arbeiten im Feld (Inbetriebnahme, Wartung, Fehlerbehebung) am Regel- und Steuergerät zielgerichtet, schnell und adaptiv auf die jeweils vorliegende Situation durchzuführen.

Eine weitere vorteilhafte Ausgestaltung der Erfindung liegt darin, dass der Verbauungsort des Regel- und Steuergerätes in einem Gebäude durch ein entsprechendes Positionssignal dem mobilen Kommunikationsendgerät (Smartphone) mitgeteilt wird. Dadurch dass der Verbauungsort des Regel- und Steuergerätes einem Benutzer (z.B. Servicetechniker) auf dessen mobilen Kommunikationsendgerät (z.B. Smartphone, Laptop, Tablet-Computer) mitgeteilt wird, muss der Benutzer das entsprechende Regel- und Steuergerät in einem Raum nicht erst suchen und lokalisieren. Ein Regel- und Steuergerät bzw. ein Controller für die Steuerung von HLK- oder Raumautomatisierungsanwendungen ist meistens dezentral in einem Raum montiert und oft schwer auffindbar, in der Regel in der Zwischendecke, unter einem Fensterpanel, oder im Zwischenboden. Das erschwert für den Inbetriebsetzer das Auffinden (Lokalisierung) des Regel- und Steuergerätes bzw. des Controllers. Durch das Positionssignal wird z.B. ein Inbetriebsetzer direkt zum Verbauungsort des Regel- und Steuergerätes in einem Raum geführt. Unnötige Zeit zum Suchen des Regel- und Steuergerätes entfällt. Das Positionssignal kann satellitenbasiert (z.B. über GPS) oder durch ein Indoor Positioning System (IPS, System zur Indoor-Positionsbestimmung) bereitgestellt werden. Das mobile Kommunikationsendgerät (z.B. Smartphone) kann den Benutzer zum entsprechenden Regel- und Steuergerät navigieren (z.B. durch Sprachausgabe). Mit Vorteil wird das Positionssignal vom Regel- und Steuergerät selbst ausgesendet. Das Positionssignal kann z.B. durch einen kleinen Sender (z.B. Beacon, iBeacon) ausgegeben werden, der sich im oder am Regel- und Steuergerät befindet. Mit Vorteil basiert der Sender auf Bluetooth Low Energy (BLE).

Eine weitere vorteilhafte Ausgestaltung der Erfindung liegt darin, dass der Verbauungsort des Regel- und Steuergerätes im mobilen Kommunikationsendgerät und/oder im BIM-Modell gespeichert wird. Mit Vorteil erfolgt eine Speicherung des Verbauungsortes im mobilen Kommunikationsendgerät solange, bis die durchzuführenden Arbeiten (z.B. Fehlersuche) erfolgreich beendet worden sind. Dadurch ist u.a. sichergestellt, dass Datenschutz der Kundendaten bei einem unerlaubten Zugriff auf die Kundenanlage gewährleistet ist. Mit Vorteil erfolgt eine Verschlüsselung der BIM Daten im BIM-Modell. Eine Speicherung des Verbauungsortes im BIM-Modell stellt sicher, dass die Verbauungsinformation im BIM-Modell aktuell gehalten wird und für weitere spätere Arbeiten auch weiteren Benutzern zur Verfügung steht.

Eine weitere vorteilhafte Ausgestaltung der Erfindung liegt darin, dass durchgeführte Handlungsanweisungen und die jeweiligen Ergebnisse (erfolgreiche Fehlerbehebung oder keine Fehlerbehebung, oder erfolgreiches Durchführen einer Wartungsarbeit, etc.) im BIM-Modell gespeichert werden. Mit Vorteil ist diese Information im BIM-Modell dem jeweiligen Regel- und Steuergerät zugeordnet, z.B. als Attribut. Mit Vorteil wird diese Information bei der Datenanalyse (Data Analytics), insbesondere bei Deep Learning Methoden vorteilhaft verwendet.

Eine weitere vorteilhafte Ausgestaltung der Erfindung liegt darin, dass die zentrale Stelle (z.B. als remote Server) und das BIM-Modell in einer Cloud-Infrastruktur realisiert sind. Mit Vorteil ist die zentrale Stelle (z.B. als Server) in ein Gebäudemanagementsystem bzw. eine Gebäudeleitstelle integriert. Ein Gebäudemanagementsystem oder eine Gebäudeleitstelle umfassen eine Prozessorinfrastruktur, in die der Server bzw. ein Datenbankserver mit dem Gebäudeinformationsmodell (BIM-Modell) bezüglich Software- und Hardwareausstattung leicht integrierbar sind. Z.B. als verteiltes oder vernetztes System in einer Cloud (Rechnerwolke). Mit Vorteil umfasst die Cloud-Infrastruktur entsprechende Kommunikationseinrichtungen (z.B. Internet, Funk, WLAN) zur Kommunikation mit dem mobilen Kommunikationsendgerät.

Eine weitere vorteilhafte Ausgestaltung der Erfindung liegt darin, dass die dedizierten Handlungsanweisungen von der zentralen Stelle automatisch basierend auf den jeweiligen aktuellen Konfigurationsdaten und Datenpunkten des Regel- und Steuergerätes, und im BIM-Modell hinterlegten Daten, aktualisiert bereitgestellt werden. Mit Vorteil werden die dedizierten Handlungsanweisungen nach einer entsprechenden Datenanalyse (data analytics; mit entsprechend geeigneten Analysemethoden) auf dem mobilen Kommunikationsendgerät bereitgestellt und im Display übersichtlich visualisiert. Dadurch sind die Handlungsanweisungen auf die aktuell herrschenden Gegebenheiten im Regel- und Steuergerät und im BIM-Modell bezogen.

Mit Vorteil gibt der Benutzer (z.B. Servicetechniker) nach Durchführung bzw. nach Abarbeitung der Handlungsanweisungen Rückmeldungen betreffend die Ergebnisse der durchgeführten Handlungsanweisungen bzw. seiner Tätigkeiten an die zentrale Stelle. Mit Vorteil erfolgt die Rückmeldung an die zentrale Stelle (z.B. Server in Cloud) durch entsprechende Eingaben auf dem mobilen Kommunikationsendgerät, mit Vorteil durch ein entsprechendes Menü oder Template (z.B. behobene Fehler, Zeit, Name des Technikers). Mit Vorteil umfasst eine Rückmeldung auch multi-mediale Funktionen (z.B. Foto, Videosequenz, oder Audio-Notiz). Mit Vorteil werden die Rückmeldungen in einer entsprechenden Datenstruktur (z.B. XML) im BIM-Modell in der Cloud abgespeichert. So werden zukünftige Handlungsanweisungen durch die Rückmeldungen detaillierter und zuverlässiger. Mit Vorteil werden in der zentralen Stelle für die Analyse von Fotos bzw. Videosequenzen Methoden der Muster-erkennung eingesetzt, um z.B. Fehler oder Schwachstellen zu erkennen.

Weiterhin können diese Rückmeldungen durch Data Analytics untersucht werden, um z.B. gezielt Schwachstellen im Regel- und Steuergerät bzw. in der Konfiguration oder Parametrierung des Regel- und Steuergerätes zu identifizieren. Basierend auf dieser Schwachstellenanalyse können z.B. Forderungen (Damage Claims) für entsprechende Hersteller oder Lieferanten abgeleitet werden. Mit Vorteil werden Forderungen (Damage Claims) für entsprechende Hersteller oder Lieferanten automatisch abgeleitet und automatisch an entsprechende Stellen (z.B. Einkauf, Claim Management (Nachforderungsmanagement)) weitergeleitet.

Die Aufgabe wird auch gelöst durch eine Anordnung zur Inbetriebnahme und/oder Wartung eines Regel- und Steuergerätes (z.B. Controller mit entsprechender Software und/oder Firmware) für Feldgeräte (z.B. Aktor, Sensor, Stellglieder) für eine Gebäudeautomatisierung,
wobei die Anordnung ein Regel- und Steuergerät, mindestens ein daran angeschlossenes Feldgerät, ein mobiles Kommunikationsendgerät und eine zentrale Stelle umfasst,
wobei zwischen dem Regel- und Steuergerät und dem mobilen Kommunikationsendgerät (z.B. Smartphone, Tablet-Computer) auf eine benutzerseitige Eingabe hin (z.B. durch einen Servicetechniker) eine Kommunikationsverbindung (z.B. WLAN, Bluetooth, Funk) erstellbar ist;
wobei das mobile Kommunikationsendgerät dazu eingerichtet ist, über die Kommunikationsverbindung einen Identifikationscode (z.B. ID, Identifikationsnummer), aktuelle Konfigurationsdaten und aktuelle Datenpunkte des Regel- und Steuergerätes abzufragen, wobei der Zustand eines Parameters eines Feldgerätes durch einen Datenpunkt repräsentierbar ist;
wobei das mobile Kommunikationsendgerät weiter dazu eingerichtet ist, über eine weitere Kommunikationsverbindung (z.B. WLAN, Internet, Mobilfunkverbindung, Satellitenverbindung) mit einer zentralen Stelle (z.B. Server in Cloud) zu kommunizieren, wobei in der zentralen Stelle ein BIM-Modell (Gebäudeinformationsmodell) des entsprechenden Gebäudes hinterlegbar ist;
wobei über den Identifikationscode (z.B. ID, eindeutige Adresse) die aktuellen Daten des Regel- und Steuergerätes mit den im BIM-Modell hinterlegten Daten des Regel- und Steuergerätes in Beziehung setzbar sind; und
wobei das mobile Kommunikationsendgerät dazu eingerichtet ist (z.B. durch eine installierte App) für den Benutzer (z.B. Servicetechniker), basierend auf den aktuellen Konfigurationsdaten, den aktuellen Datenpunkten, den im BIM-Modell hinterlegten Daten des Regel- und Steuergerätes, dediziert Handlungsanweisungen (z.B. für eine Fehlerbehebung oder für eine benötigte/empfohlene Wartungsmassnahme) bereitzustellen,
wobei das Regel- und Steuergerät (RSG1, RSG2) dazu eingerichtet ist seinen Verbauungsort in einem Gebäude durch ein entsprechendes Positionssignal (POS) dem mobilen Kommunikationsendgerät (MG1, MG2) mitzuteilen,
wobei die dedizierten Handlungsanweisungen (HA) auf dem mobilen Kommunikationsendgerät (MG1, MG2) des Benutzers (B1, B2) als Folge von Anweisungen für Feldgeräte (FG1, FG2) abgearbeitet werden, wobei Messwerte von Sensoren, die datentechnisch am Regel- und Steuergerät (RSG1, RSG2) angeschlossen sind, als Ergebnis der Anweisungen für die Feldgeräte (FG1, FG2) durch das mobile Kommunikationsendgerät (MG1, MG2) erfasst werden, wobei, basierend auf den Messwerten der Sensoren, weitere Handlungsanweisungen (HA) für den Benutzer (B1, B2) auf dem mobilen Kommunikationsendgerät (MG1, MG2) bereitgestellt werden. Die aktuellen Daten des Regel- und Steuergerätes umfassen z.B. Konfigurationsdaten, Parametrierungsdaten, oder dynamische Prozessdaten aus dem Feld. Die erfindungsgemässe Anordnung ist handelsüblichen Komponenten (COTS, Commercials off the shelf) bzw. mit sowieso vorhandenen Komponenten (z.B. mobile Kommunikationsendgeräte, Smartphones) realisierbar. Die benutzerseitige Eingabe auf dem mobilen Kommunikationsendgerät kann z.B. durch Tastatureingabe, Stimmeingabe (mit entsprechender Stimm- und Befehlserkennungssoftware auf dem mobilen Kommunikationsendgerät), oder durch eine entsprechende Touch-Eingabe auf dem Display erfolgen.

Auch die weitere Kommunikationsverbindung (z.B. WLAN, Internet, Mobilfunkverbindung, Satellitenverbindung) zwischen dem mobilen Kommunikationsendgerät mit der zentralen Stelle (z.B. BIM-Server in Cloud) erfolgt mit Vorteil über eine entsprechende benutzerseitige Eingabe auf dem mobilen Kommunikationsendgerät.

Eine weitere vorteilhafte Ausgestaltung der Erfindung liegt darin, dass die Handlungsanweisungen als auf dem Regel- und Steuergerätes ablauffähigen Skript bereitstellbar sind. Das mobile Kommunikationsendgerät (z.B. Smartphone) erhält die Handlungsanweisungen (z.B. in Form von sequentiellen Aktionen (Skripts)) von der zentralen Stelle und arbeitet diese (mit Vorteil automatisch) ab, d.h. das mobile Kommunikationsendgerät sendet die jeweiligen Aktionen an das Regel- und Steuergerät, dort werden diese entgegengenommen und schrittweise (step-by-step) abgearbeitet (z.B. in Form einer Schrittsteuerung). Das Regel- und Steuergerät sendet die Ergebnisse (d.h. das Resultat bzw. das Feedback auf die ausgeführten Handlungsanweisungen) an das mobile Kommunikationsendgerät. Optional werden die Ergebnisse auf dem mobilen Kommunikationsendgerät gespeichert. Mit Vorteil werden die Ergebnisse zur zentralen Stelle (Server in Cloud) weitergeleitet, wo sie im BIM-Modell hinterlegt und abgespeichert werden.

Eine weitere vorteilhafte Ausgestaltung der Erfindung liegt darin, dass die Kommunikation zwischen dem Regel- und Steuergerät und dem mobilen Kommunikationsendgerät über eine drahtlose Verbindung (z.B. WLAN, NFC, Bluetooth) erfolgt. Üblicherweise sind in Gebäuden drahtlose Kommunikationsnetze schon installiert oder leicht nachrüstbar bzw. realisierbar. Mobile Kommunikationsendgeräte (z.B. Smartphones) sind für eine drahtlose Kommunikation üblicherweise mit entsprechender Hardware und Software ausgestattet.

Eine weitere vorteilhafte Ausgestaltung der Erfindung liegt darin, dass die drahtlose Verbindung zwischen dem Regel- und Steuergerät und dem mobilen Kommunikationsendgerät über ein vom Benutzer am Regel- und Steuergerät installiertes Gerät (z.B. ein Funkmodul) erfolgt. Wenn ein Regel- und Steuergerät nicht mit einem Sender/Empfänger für eine drahtlose Verbindung ausgestattet ist, kann ein Benutzer (z.B. Inbetriebsetzer) am Regel- und Steuergerät ein Gerät (z.B. WLAN-Adapter) für eine drahtlose Kommunikation mit dem mobilen Kommunikationsendgerät installieren und dadurch eine Kommunikationsverbindung zwischen dem Regel- und Steuergerät (z.B. Controller) und dem mobilen Kommunikationsendgerät einrichten.

Eine weitere vorteilhafte Ausgestaltung der Erfindung liegt darin, dass die an die zentrale Stelle gesendeten Zustände der Datenpunkte in ein Projektmanagementsystem (z.B. MS Project) übertragen werden. Dadurch kann der Projektfortschritt bei der Inbetriebnahme sehr leicht protokolliert und nachvollzogen werden.

Eine weitere vorteilhafte Ausgestaltung der Erfindung liegt darin, dass die an die zentrale Stelle gesendeten Zustände der Datenpunkte in ein Gebäudeinformationsmodell (BIM-Modell) für das entsprechende Gebäude übertragen werden. Bei der zentralen Stelle kann es sich z.B. um ein Gebäudeautomatisierungssystems bzw. Gebäudemanagementsystem handeln. Das Gebäudemodell (BIM, Building Information Model) des entsprechenden Gebäudes ist z.B. in einem Speicher (mit Vorteil in einem persistenten Speicher) des Gebäudeautomatisierungssystems abgelegt, bzw. in einer Datenbank auf die das Gebäudeautomatisierungssystem Zugriff hat. Durch die Übertragung der Zustände der Datenpunkte in ein Gebäudemodell wird die Konsistenz zwischen der im Gebäude installierten Geräte und dem elektronischen Gebäudemodell sichergestellt. Die Übertragung der Zustände der Datenpunkte in das Gebäudemodell kann online oder durch einen Batchlauf (z.B. abends oder zu festgelegten Zeitpunkten) erfolgen.

Eine weitere vorteilhafte Ausgestaltung der Erfindung liegt darin, dass ein erkannter Fehlerzustand in einem Datenpunkt auf dem mobilen Kommunikationsendgerät angezeigt wird und wobei der erkannte Fehlerzustand vom Bediener mit weiteren Daten versehen, an die zentrale Stelle gesendet wird. Auf dem mobilen Kommunikationsendgerät des Bedieners ist eine Inbetriebnahme- und/oder Testsoftware für das in Betrieb zu nehmende Regel- und Steuergerät installiert (z.B. durch einen Internet-Download). Mit Hilfe dieser Software kann der Bediener mit dem mobilen Kommunikationsendgerät über die Kommunikationsverbindung Schritt für Schritt Testfälle auf dem Regel- und Steuergerät abarbeiten. Erkannte Fehler werden auf dem Display des Kommunikationsendgerätes angezeigt. Der Bediener kann eine Fehlermeldung bezüglich eines erkannten Fehlers vom Kommunikationsendgerät zur zentralen Stelle (z.B. Gebäudemanagementsystem, Leitstelle, Leitserver) senden und diese Fehlermeldung dediziert mit weiteren Daten zum Fehler versehen bzw. anreichern. Z.B. mit Daten zum Verbauungsort (z.B. Lage, Temperatur, Feuchtigkeit), Fotos von Gerät und/oder Verbauungsort, Einschätzung zur Fehlerursache und/oder Fehlerbehebung (Reparatur ausreichend oder Austausch erforderlich). Dadurch wird die Fehlerbeschreibung konkreter und umfassender. Die Analyse und Behebung der Fehlermeldung wird durch die anschauliche Dokumentation effektiver.

Die Erfindung sowie vorteilhafte Ausführungen der vorliegenden Erfindung werden am Beispiel der nachfolgenden Figuren erläutert. Dabei zeigen:
- FIG 1: eine erste beispielhafte Anordnung zur Inbetriebnahme und/oder Wartung eines Regel- und Steuergerätes für Feldgeräte für eine Gebäudeautomatisierung,
- FIG 2: eine zweite beispielhafte Anordnung zur Inbetriebnahme und/oder Wartung eines Regel- und Steuergerätes für Feldgeräte für eine Gebäudeautomatisierung, und
- FIG 3: ein beispielhaftes Flussdiagramm für ein Verfahren zur Inbetriebnahme und/oder Wartung eines Regelund Steuergerätes für Feldgeräte für eine Gebäudeautomatisierung.

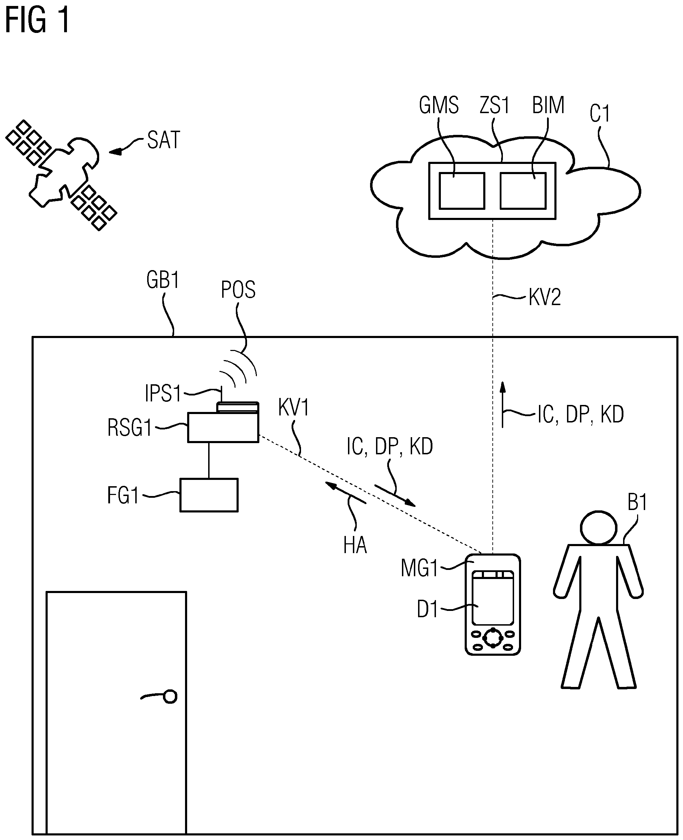

Figur 1 zeigt eine erste beispielhafte Anordnung zur Inbetriebnahme und/oder Wartung eines Regel- und Steuergerätes RSG1 (z.B. Controller, Mikrocontroller) für Feldgeräte FG1 (z.B. Aktor, Sensor, Stellglieder) für eine Gebäudeautomatisierung, wobei zwischen dem Regel- und Steuergerät RSG1 und einem mobilen Kommunikationsendgerät MG1 (z.B. Smartphone, Tablet-Computer) eines Benutzers B1 (z.B. Servicetechniker oder Wartungsingenieur) eine Kommunikationsverbindung KV1 erstellbar ist; wobei das mobile Kommunikationsendgerät MG1 dazu eingerichtet ist, über die Kommunikationsverbindung KV1 einen Identifikationscode IC, aktuelle Konfigurationsdaten KD und aktuelle Datenpunkte DP des Regel- und Steuergerätes RSG1 abzufragen, wobei der Zustand eines Parameters eines Feldgerätes FG1 durch einen Datenpunkt DP repräsentierbar ist; wobei das mobile Kommunikationsendgerät MG1 weiter dazu eingerichtet ist, über eine weitere Kommunikationsverbindung KV2 mit einer zentralen Stelle ZS1 (z.B. Server in Cloud C1) zu kommunizieren, wobei in der zentralen Stelle ZS1 ein BIM-Modell BIM des entsprechenden Gebäudes GB1 hinterlegbar ist; wobei über den Identifikationscode IC die aktuellen (dynamischen) Daten des Regel- und Steuergerätes RSG1 mit den im BIM-Modell BIM hinterlegten Daten des Regel- und Steuergerätes RSG1 in Beziehung setzbar sind; und wobei das mobile Kommunikationsendgerät MG1 dazu eingerichtet ist (z.B. durch eine auf dem mobilen Kommunikationsendgerät MG1 installierte App) für den Benutzer B1, basierend auf den aktuellen Konfigurationsdaten KD, den aktuellen Datenpunkten DP, den im BIM-Modell BIM hinterlegten Daten des Regel- und Steuergerätes RSG1, dediziert Handlungsanweisungen HA (z.B. für eine Fehlerbehebung oder für eine benötigte/empfohlene Wartungsmassnahme) bereitzustellen. Mit Vorteil werden die Handlungsanweisungen HA auf dem Display D1 des mobilen Kommunikationsendgerätes MG1 als Folge von Aktionen dargestellt, die Schritt für Schritt oder als Ablauf von Schritten (z.B. in Form eines vom Benutzer B1 initiierbaren Skripts) auf dem Regel- und Steuergerät RSG1 ausführbar sind. Mit Vorteil sind die Kommunikationsverbindungen KV1 und KV2 jeweils über eine benutzerseitige Eingabe auf dem mobilen Kommunikationsendgerät initiierbar bzw. einrichtbar. Die Handlungsanweisungen werden benutzerseitig auf dem mobilen Kommunikationsendgerät bereitgestellt.

Beim Identifikationscode IC kann es sich z.B. um eine eindeutige Identifikationsnummer oder eine eindeutige Adresse in einem Adressraum eines Gebäudeautomatisierungssystems handeln.

Bei einem Feldgerät FG1 für die Gebäudeautomatisierung kann es sich z.B. um einen Aktor (z.B. Klimaanlage, Lüftungsanlage, Dimmer, Antriebe für Markisen, Vorhänge, Garagentor, etc.) oder um einen Sensor (z.B. Temperaturfühler, Präsenzmelder, Windsensor, etc.) handeln.

Bei der zentralen Stelle ZS1 kann es sich z.B. um ein Gebäudemanagementsystem GMS handeln, das z.B. auf einem Server in einer Cloud-Infrastruktur C1 implementiert bzw. "gehosted" ist. Der Server umfasst geeignete Ein-/Ausgabe-, Speicher-, Prozessor-, und Kommunikationseinheiten bzw. -entsprechende Einrichtungen. Der Server umfasst weiterhin geeignete Software (z.B. für die Durchführung von Analysemethoden (Data Analytics). Der Server (z.B. entsprechend eingerichteter PC, Workstation) hat Zugriff auf das BIM-Modell bzw. Gebäudeinformationsmodell BIM. Das BIM-Modell BIM ist mit Vorteil in einer entsprechenden Datenstruktur (Datenmodell, z.B. IFC "Industrie Foundation Classes") in einer entsprechenden Datenbank (z.B. In-Memory Datenbank) abgelegt.

Mit Vorteil sind die Handlungsanweisungen HA als auf dem Regel- und Steuergerätes RSG1 ablauffähigen bzw. ausführbaren Skript bereitstellbar. Das mobile Kommunikationsendgerät MG1 arbeitet die Handlungsanweisungen HA Schritt für Schritt (step by step) oder als Makro (Prozedur, Skript) ab, das Regel- und Steuergerät RSG1 nimmt sie entgegen und führt sie physikalisch aus, das mobile Kommunikationsendgerät MG1 dokumentiert die Ergebnisse (z.B. erfolgreiche Fehlerbehebung). Mit Vorteil werden die Ergebnisse vom mobilen Kommunikationsendgerät MG1 an die zentrale Stelle ZS1 zur Ablage im BIM-Modell gemeldet. Mit Vorteil werden die Ergebnisse historischer Handlungsanweisungen bei der Generierung zukünftiger Handlungsanweisungen verwendet, z.B. durch Self-Learning-Methoden (z.B. Selbstlernende Systeme, Deep Analysis, Neuronale Netze) .

Ein Aspekt der vorliegenden Erfindung ist es über den eindeutigen Identifikationscode IC des Regel- und Steuergerätes RSG1 die aktuellen Daten des entsprechenden Regel- und Steuergerätes RSG1 mit den im BIM-Modell BIM hinterlegten Daten des Regel- und Steuergerätes RSG1 durch eine entsprechende Software (z.B. App) auf dem mobilen Kommunikationsendgerät MG1 in Beziehung zu setzen. Dadurch kann ein Benutzer B1 (z.B. Servicetechniker) im Feld effektiv und effizient Fehlerbehebungs- oder Wartungsarbeiten für das entsprechende Regel- und Steuergerät RSG1 durchführen.

Bei den aktuellen Daten des Regel- und Steuergerätes RSG1 handelt es sich um dynamische Prozessdaten (in Form von Datenpunkten DP und um Konfigurationsdaten KD (Geräteparameter, Projektierungsdaten, installierte Software- oder Firmwareversionen, Patches, etc.). Bei den im BIM-Modell BIM hinterlegten Daten des Regel- und Steuergerätes RSG1 handelt es sich z.B. um durchgeführte Wartungs- bzw. Fehlerbehebungs-aktivitäten aus der Historie oder um Wartungsintervalle für das Gerät RSG1.

Das Regel- und Steuergerät RSG1 ist üblicherweise dazu eingerichtet ein oder mehrere Feldgeräte FG1 für eine Komfortsteuerung (z.B. Heizen, Lüften, Klima (HLK)) in einem Gebäude GB1 zu steuern bzw. zu regeln. Das mobile Kommunikationsendgerät MG1 ist mit einem Softwareprogramm (z.B. App) ausgestattet, mit der der Bediener B1 Testfälle an das Regel- und Steuergerätes RSG1 senden kann und die durch einen jeweiligen Testfall betroffenen Datenpunkte DP im Regel- und Steuergerät RSG1 abfragen kann. Die Zustände der Datenpunkte DP können auf dem mobilen Kommunikationsendgerät MG1 dargestellt und abgespeichert werden. Über die Kommunikationsverbindung KV2 können die Zustände der Datenpunkte DP an die zentrale Stelle ZS1 weitergeleitet werden. Dies kann online (in Echtzeit) oder in einem Batchbetrieb (d.h. zu definierten Zeitpunkten) erfolgen. Bei der zentralen Stelle ZS1 kann es sich z.B. um eine Gebäudeleitstelle oder ein Gebäudemanagementsystem GMS mit einem entsprechenden Server handeln. Mit Vorteil werden die Zustände der Datenpunkte DP in der zentralen Stelle ZS in einer Datenbank DB in einem BIM-Modell BIM gespeichert. In der zentralen Stelle ZS1 können die empfangenen Daten zur Fortschrittskontrolle bei der Inbetriebnahme eines Gebäudes GB1 verwendet werden. Die empfangenen Daten können in der zentralen Stelle ZS1 weiter analysiert und ausgewertet werden und z.B. für die Service- und Wartungsplanung im Gebäude GB1 verwendet werden.

Mit Vorteil umfasst die beispielhafte Anordnung gemäss Figur 1 ein Positionsbestimmungssystem (IPS1, SAT) zur Bestimmung des Verbauungsortes des Regel- und Steuergerätes RSG1 im Gebäude GB1. Beim Positionsbestimmungssystem kann es sich um ein satellitengestütztes Positionsbestimmungssystem SAT handeln, z.B. GPS und/oder um ein Indoor-Positionsbestimmungssystem IPS1 (z.B. iBeacon von Apple). Mit Vorteil basiert das Indoor-Positionsbestimmungssystem IPS1 auf Bluetooth Low Energy (BLE). Mit Vorteil ist das Regel- und Steuergerät RSG1 mit einem Funksender (z.B. iBeacon) ausgestattet, der die Positionsdaten POS des Regel- und Steuergerätes RSG1 aussendet. Die Positionsdaten POS werden vom mobilen Kommunikationsendgerät MG1 des Benutzers B1 empfangen. Basierend auf den empfangenen Positionsdaten POS navigiert das mobile Kommunikationsendgerät MG1 den Benutzer B1 zum Regel- und Steuergerät RSG1. Regel- und Steuergeräte RSG1 sind in einem Gebäude GB1 oft in deiner Decke oder unter einem Fussboden verbaut. Die Navigation zum Regel- und Steuergerät RSG1 bedeutet u.a. Zeitersparnis für den Benutzer B1.

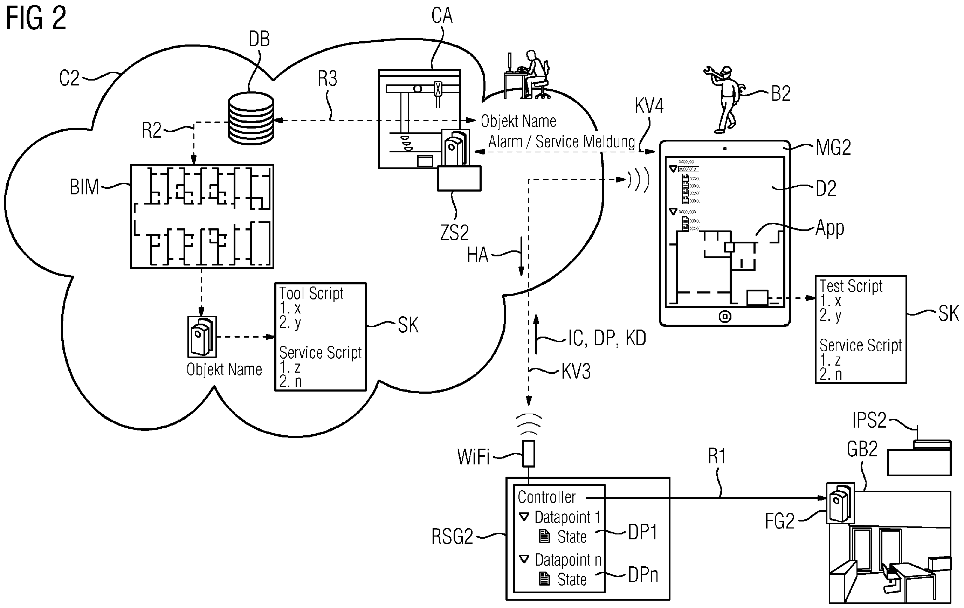

Figur 2 zeigt eine zweite beispielhafte Anordnung zur Inbetriebnahme und/oder Wartung eines Regel- und Steuergerätes RSG2 (z.B. Controller) für Feldgeräte FG2 (z.B. Aktor, Sensor, Stellglieder) für eine Gebäudeautomatisierung, wobei zwischen dem Regel- und Steuergerät RSG2 und einem mobilen Kommunikationsendgerät MG2 (z.B. Smartphone, Tablet-Computer, Laptop) eines Benutzers B2 (z.B. Servicetechniker) eine Kommunikationsverbindung KV3 erstellbar ist; wobei das mobile Kommunikationsendgerät MG2 dazu eingerichtet ist, über die Kommunikationsverbindung KV3 einen Identifikationscode IC, aktuelle Konfigurationsdaten KD und aktuelle Datenpunkte DP des Regel- und Steuergerätes RSG2 abzufragen, wobei der Zustand eines Parameters eines Feldgerätes FG2 durch einen Datenpunkt DP repräsentierbar ist; wobei das mobile Kommunikationsendgerät MG2 weiter dazu eingerichtet ist, über eine weitere Kommunikationsverbindung KV4 mit einer zentralen Stelle ZS2 (z.B. Server in Cloud) zu kommunizieren, wobei in der zentralen Stelle ZS2 ein BIM-Modell BIM des entsprechenden Gebäudes GB2 hinterlegbar ist; wobei über den Identifikationscode IC (z.B. eineindeutige Identifizierungsnummer bzw. Adresse) die aktuellen Daten des Regel- und Steuergerätes RSG2 mit den im BIM-Modell BIM hinterlegten Daten des Regel- und Steuergerätes RSG2 in Beziehung setzbar sind; und wobei das mobile Kommunikationsendgerät MG2 dazu eingerichtet ist (z.B. durch eine installierte App) für den Benutzer B2 (z.B. Servicetechniker), basierend auf den aktuellen Konfigurationsdaten KD, den aktuellen Datenpunkten DP, den im BIM-Modell BIM hinterlegten Daten des Regel- und Steuergerätes RSG2, dediziert Handlungsanweisungen HA (z.B. für eine Fehlerbehebung oder für eine benötigte/empfohlene Wartungsmassnahme) bereitzustellen. Mit Vorteil handelt es sich bei den Kommunikationsverbindungen KV3, KV4 um drahtlose Kommunikationsverbindungen (z.B. Funkverbindungen, WLAN).

Unter "in Beziehung setzen" der im BIM-Modell BIM hinterlegten Daten (z.B. in der Vergangenheit durchgeführte Wartungs- oder Fehlerbehebungsarbeiten, Hersteller- oder Lieferantendaten) des Regel- und Steuergerätes RSG2 mit den aktuellen Daten (insbesondere aktuelle Konfigurationsdaten KD und aktuelle Datenpunkte DP (z.B. Zustände)) des Regel- und Steuergerätes RSG2 versteht man z.B. die gemeinsame Verwendung dieser Daten in Analyse- oder Auswertungsprogrammen (z.B. in Selbstlernenden Systemen bzw. Datenanalyseprogrammen (z.B. Deep Learning); Verknüpfung und in Beziehung Setzung dieser Daten in Neuronalen Netzen). Weiterhin wird unter "in Beziehung setzen" eine kontextabhängige Darstellung von Informationen zum Regel- und Steuergerät RSG2 auf dem Display D2 des mobilen Kommunikationsendgerätes MG2 verstanden. Z.B. bei der Analyse eines aktuellen Datenpunktes DP1, DPn die Darstellung von entsprechenden historischen Datenpunkten, die im BIM-Modell BIM dokumentiert und abgespeichert sind. Durch ein entsprechend eingerichtetes Softwareprogramm (z.B. App) auf dem mobilen Kommunikationsendgerät MG2 werden aktuelle Daten des Regel- und Steuergerät RSG2 (Konfigurationsdaten, Projektierungsdaten, Zustandsdaten (Stati)) und entsprechende Daten aus dem BIM-Modell BIM zusammengeführt und daraus dediziert Handlungsanweisungen für eine aktuell vorliegende Situation (z.B. Fehlerbehebung, Wartung) für einen Bediener B2 generiert.

In der Darstellung gemäss Figur 2 überwacht und steuert das beispielhafte Regel- und Steuergerät RSG2 ein beispielhaftes Feldgerät FG2 (z.B. ein Stellglied für Jalousien) in einem Gebäude GB2. Das Regel- und Steuergerät RSG2 (z.B. Controller oder Microcontroller) erfasst die beispielhaften Datenpunkte DP1, DPn, z.B. Zustände des Feldgerätes FG2. Durch die Verbindungslinie R1 (z.B. drahtgebundene oder drahtlose Kommunikationsbeziehung) ist illustriert, dass das Regel- und Steuergerät RSG2 das Feldgerät FG2 steuert und überwacht.

Ein Bediener B2 (z.B. Servicetechniker, Facilitymanager) kann über eine geeignete Kommunikationsverbindung KV4 eine Verbindung zwischen dem Regel- und Steuergerät RSG2 und seinem mobilen Kommunikationsendgerät MG2 (z.B. Smartphone) herstellen. Über die Kommunikationsverbindung KV4 können ein Identifikationscode IC, Konfigurationsdaten KD und Datenpunkte DP vom Regel- und Steuergerät RSG2 abgerufen und auf das mobile Kommunikationsendgerät MG2 des Benutzers B2 übertragen werden.

Über den eindeutigen Identifikationscode IC des Regel- und Steuergerätes RSG2 kann der Benutzer B2 von einer zentralen Stelle ZS2 (z.B. entsprechend eingerichteter und ausgestatteter Server in Cloud C2) im BIM-Modell BIM abgelegte Daten (z.B. durchgeführte Wartungsarbeiten und dokumentierte Störfälle) zum entsprechenden Regel- und Steuergerät RSG2 abfragen und auf das mobile Kommunikationsendgerät MG2 transferieren. Mit einer entsprechend eingerichteten App des mobilen Kommunikationsendgerätes MG2 können die entsprechenden Daten zum entsprechenden Regel- und Steuergerät RSG2 aus dem BIM-Modell BIM mit den aktuellen Daten KD, DP des entsprechenden Regel- und Steuergerät RSG2 in Beziehung gebracht, verarbeitet und für die aktuell vorliegende Situation (z.B. Fehlerbehebung) entsprechend dedizierte Handlungsanweisungen HA generiert werden. Dazu ist das mobile Kommunikationsendgerät MG2 mit entsprechender Hardware (insb. Prozessor, Speicher) und Software (z.B. Analyse-Programme, KI-Programme) ausgestattet.

Die dedizierten Handlungsanweisungen HA können aber auch von der zentralen Stelle ZS2 (z.B. Server in Cloud C2) generiert werden und dem Benutzer B2 auf dem mobilen Kommunikationsendgerät MG2 in einer entsprechenden App und/oder auf dem Display D2 über die Kommunikationsverbindung KV4 bereitgestellt werden. Der Benutzer B2 leitet dazu die Daten IC, KD, DP des entsprechenden Regel- und Steuergerät RSG2 über die Kommunikationsverbindung KV4 an die zentrale Stelle ZS2. In der zentralen Stelle ZS2 werden über den eindeutigen Identifikationscode IC des Regel- und Steuergerätes RSG2 die aktuellen Daten KD, DP mit den entsprechenden Daten im BIM-Modell BIM in einer entsprechenden Cloud-Applikation CA in Beziehung gesetzt und analysiert (Data Analytics Verfahren). Basierend darauf werden für die jeweils vorliegende Situation (z.B. für eine Fehlerbehebung) entsprechende Handlungsanweisungen HA generiert und über die Kommunikationsverbindung KV4 dem Benutzer B2 auf dem mobilen Kommunikationsendgerät MG2 bereitgestellt.

Mit Vorteil sind die Handlungsanweisungen HA als auf dem Regel- und Steuergerätes RSG2 ablauffähigen bzw. ausführbaren Skript SK bereitstellbar. Das mobile Kommunikationsendgerät MG2 arbeitet die Handlungsanweisungen HA Schritt für Schritt (step by step) oder als Makro (Prozedur, Skript) ab, das Regel- und Steuergerät RSG2 nimmt sie entgegen und führt sie physikalisch aus, das mobile Kommunikationsendgerät MG2 dokumentiert die Ergebnisse (z.B. erfolgreiche Fehlerbehebung). Mit Vorteil werden die Ergebnisse vom mobilen Kommunikationsendgerät MG2 an die zentrale Stelle ZS2 zur Ablage im BIM-Modell BIM gemeldet. Mit Vorteil werden die Ergebnisse historischer Handlungsanweisungen bei der Generierung zukünftiger Handlungsanweisungen verwendet, z.B. durch Self-Learning-Methoden (z.B. Selbstlernende Systeme, Deep Analysis, Neuronale Netze) .

Mit Vorteil umfasst die beispielhafte Anordnung gemäss Figur 2 ein Positionsbestimmungssystem IPS2 zur Bestimmung des Verbauungsortes des Regel- und Steuergerätes RSG2 im Gebäude GB2. Beim Positionsbestimmungssystem kann es sich um ein Indoor-Positionsbestimmungssystem IPS2 (z.B. iBeacon von Apple). Ein Benutzer B2 kann somit im Gebäude GB2 zum Verbauungsort des Regel- und Steuergerätes RSG2 mit Hilfe des mobilen Kommunikationsendgerät MG2 navigiert werden.

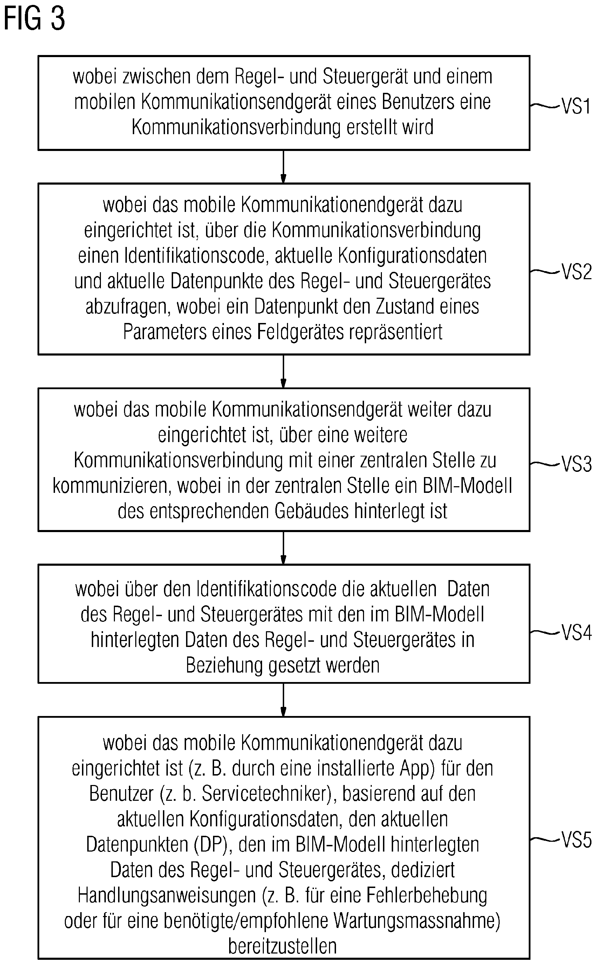

Figur 3 zeigt ein beispielhaftes Flussdiagramm für ein Verfahren zur Inbetriebnahme und/oder Wartung eines Regel- und Steuergerätes (z.B. Controller) für Feldgeräte (z.B. Aktor, Sensor, Stellglieder) für eine Gebäudeautomatisierung,
(VS1) wobei zwischen dem Regel- und Steuergerät und einem mobilen Kommunikationsendgerät (z.B. Smartphone) eines Benutzers (z.B. Servicetechniker) eine Kommunikationsverbindung erstellt wird;
(VS2) wobei das mobile Kommunikationsendgerät dazu eingerichtet ist, über die Kommunikationsverbindung einen Identifikationscode (z.B. eindeutige Adresse), aktuelle Konfigurationsdaten und aktuelle Datenpunkte des Regel- und Steuergerätes abzufragen, wobei ein Datenpunkt den Zustand eines Parameters eines Feldgerätes repräsentiert;
(VS3) wobei das mobile Kommunikationsendgerät weiter dazu eingerichtet ist, über eine weitere Kommunikationsverbindung mit einer zentralen Stelle (z.B. Server in Cloud, Gebäudeleitstelle, Projektserver, Gebäudemanagementsystem) zu kommunizieren, wobei in der zentralen Stelle ein BIM-Modell des entsprechenden Gebäudes hinterlegt ist;
(VS4) wobei über den Identifikationscode die aktuellen Daten (insbesondere auch dynamische Prozessdaten) des Regel- und Steuergerätes mit den im BIM-Modell hinterlegten Daten des Regel- und Steuergerätes in Beziehung gesetzt werden; und
(VS5) wobei das mobile Kommunikationsendgerät dazu eingerichtet ist (z.B. durch eine installierte App) für den Benutzer (z.B. Servicetechniker), basierend auf den aktuellen Konfigurationsdaten, den aktuellen Datenpunkten, den im BIM-Modell hinterlegten Daten des Regel- und Steuergerätes, dediziert Handlungsanweisungen (z.B. für eine Fehlerbehebung oder für eine benötigte/empfohlene Wartungsmassnahme) bereitzustellen. Mobile Kommunikationsendgeräte (z.B. Smartphones, Tablet-Computer) sind heutzutage weitverbreitet und mit leistungsfähigen Prozessoren und Speichern ausgestattet. Durch das Installieren eines entsprechenden Programmes (z.B. durch Herunterladen einer App) wird das mobile Kommunikationsendgerät eingerichtet, das Verfahren auszuführen. Die Infrastruktur zur Durchführung des Verfahrens ist in Gebäuden üblicherweise vorhanden, bzw. durch handelsübliche Hardware leicht und schnell nachrüstbar. Mit Vorteil handelt es sich bei den Kommunikationsverbindungen um drahtlose (wireless) Kommunikationsverbindungen, z.B. Funkverbindungen (WLAN, Bluetooth, NFC) .

Mit Vorteil werden die dedizierten Handlungsanweisungen zusätzlich basierend auf einer Fehlermeldung des Regel- und Steuergerätes bereitgestellt. Die Handlungsanweisungen können dadurch noch zielgerichteter bereitgestellt werden, da z.B. eine im BIM-Modell hinterlegte Historie zu dieser Fehlermeldung für das entsprechende Regel- und Steuergerät berücksichtigt werden kann. Mit Vorteil wird dazu ein lernendes Verfahren (Neuronales Netz) verwendet.

Mit Vorteil werden die dedizierten Handlungsanweisungen zusätzlich basierend auf einer Historienanalyse für das Regel- und Steuergerätes bereitgestellt werden. Die Daten für die Historienanalyse können vom Regel- und Steuergerät und/oder aus dem BIM stammen.

Erfindungsgemäß werden die dedizierten Handlungsanweisungen auf dem mobilen Kommunikationsendgerät (z.B. Smartphone) des Benutzers als Folge von Anweisungen für Feldgeräte, insbesondere Aktoren, abgearbeitet, wobei Messwerte von Sensoren, die datentechnisch am Regel- und Steuergerät (Controller) angeschlossen sind, als (unmittelbares) Ergebnis der Anweisungen für die Feldgeräte durch das mobile Kommunikationsendgerät erfasst werden, wobei, basierend auf den Messwerten der Sensoren, weitere Handlungsanweisungen für den Benutzers auf dem mobilen Kommunikationsendgerät bereitgestellt werden.

Eine vorteilhafte Ausgestaltung ist, dass der Verbauungsort des Regel- und Steuergerätes in einem Gebäude durch ein entsprechendes Positionssignal dem mobilen Kommunikationsendgerät mitgeteilt wird. Das Positionssignal kann vom Regel- und Steuergerät oder von einem Positionsbestimmungssystem (z.B. Indoor-Positionsbestimmungssystem) ausgesendet werden. Das mobile Kommunikationsendgerät kann, basierend auf dem empfangenen Positionssignal den Bediener (z.B. Inbetrieb-setzer) zum Verbauungsort des Regel- und Steuergerätes navigieren, mit entsprechender Navigationssoftware. Mobile Kommunikationsendgeräte (z.B. Smartphone, Tablet-Computer) sind heutzutage üblicherweise mit entsprechender Navigationssoftware ausgestattet, bzw. sind sie durch einen entsprechenden Download aufrüstbar.

Erfindungsgemäß wird der Verbauungsort des Regel- und Steuergerätes im mobilen Kommunikationsendgerät (Smartphone) und/oder im BIM-Modell gespeichert. Diese Information steht damit für spätere oder weitere Tätigkeiten zur Verfügung.

Mit Vorteil werden durchgeführte Handlungsanweisungen und die jeweiligen Ergebnisse (erfolgreiche Fehlerbehebung oder keine Fehlerbehebung) im BIM-Modell gespeichert. Mit Vorteil in einem Neuronalen Netz oder für Analyseverfahren (z.B. Deep Learing) .

Mit Vorteil sind die zentrale Stelle (z.B. remote Server) und das BIM-Modell in einer Cloud-Infrastruktur realisiert.

Erfindungsgemäß werden die dedizierten Handlungsanweisungen von der zentralen Stelle automatisch basierend auf den jeweiligen aktuellen Konfigurationsdaten, Datenpunkten, und im BIM-Modell hinterlegten Daten, aktualisiert bereitgestellt. Mit Vorteil nach einer entsprechenden Datenanalyse (data analytics Verfahren).

Die Vorteile der vorliegenden Erfindung (Verfahren und Anordnung) sind insbesondere:
- Die Erfindung nutzt die Möglichkeiten die daraus entstehen, dass Daten aus einem digitalen Gebäudemodell mit aktuellen Werten aus dem Gebäude verknüpft werden. Dieses digitale Modell basiert auf Building Information Modeling (BIM). Das Resultat der Verknüpfung dieser Daten in Verbindung bzw. Verknüpfung mit den online Datenpunkten vom Regel- und Steuergerät, die auf einem mobilen Endgerät (z.B. Smartphone / Tablet-Computer) mit aktuellen Werten und/oder Zuständen angezeigt werden. Damit wird der Servicetechniker optimal informiert und kann seine Tätigkeit effektiv & zeitsparend erfüllen. Durch eine vorherige Bereitstellung von Ersatzteilen wird ebenso Zeit gespart.
- Die Verknüpfung der Building Information Modeling (BIM) Daten mit Konfigurations Daten von Controllern (Regel- und Steuergeräten) erfolgt in einer Applikation in der Cloud.
- Für diese Verknüpfung wird der Objektname (bzw. eine eindeutige Identifizierungsinformation), der in der Cloud Applikation bei den Datenpunkten mit den Objekten im BIM hinterlegt. Dies kann bereits beim Engineering erfolgen, wenn Konfigurationen standardisierte Objektnamen verwenden.
- Der Benutzer der Applikation in der Cloud sieht neben den aktuellen Prozesswerten auch die verknüpften CAD Daten zu den Einbauorten der Peripheriegeräte (Feldgeräte).
- Bei einer Störungs- oder Wartungsmeldung von der Applikation in der Cloud kann der Benutzer (z.B. Service Techniker oder Disponent) dank der verknüpften CAD nun den Fehler genauer eingrenzen und eine bessere Ferndiagnose durchführen.
- Zeitgleich stehen die mit dieser Störungs- oder Wartungsmeldung verknüpften Gebäudeinformationsdaten dem Service Techniker, der vor Ort die Arbeiten durchführt, auf die Mobile App zur Verfügung.
- Weiter werden konkrete Schritte zur Behebung dieser Störungs- und Wartungsmeldung verknüpft. Diese ergänzen sie Informationen zu dieser Störungs- oder Wartungsmeldung.
- Durch vordefinierte Testvorschriften zu automatischen bzw. halb-automatischen Tests wird die Durchführung dieser Arbeiten geführt, d.h. es werden klare Handlungsanweisungen bzw. Verfahrensschritte auf der Mobile App des mobilen Kommunikationsendgerätes für einen Benutzer bereitgestellt.
- Die Schritte werden aufgezeichnet und es werden die multimedialen Funktionen wie Foto und/oder Audio Notiz genutzt um die Zustände vor, während, und nach der Behebung der Alarmmeldung oder Service Arbeiten zu dokumentieren.
- Die gesammelten Daten werden bei Abschluss der Arbeiten vor Ort an die Cloud Applikation übertragen und diese Daten werden umgehend zur Erstellung einer Rechnung und Dokumentation der durchgeführten Leistungen verwendet.
- Alle gesammelten Daten von dem Einsatz des Service Technikers werden in der Cloud archiviert und können später mit Hilfe von Data Analytics ausgewertet werden um Rückschlüsse auf Qualität bzw. Mängel zu ziehen.
- Eine fundierte Ferndiagnose für Alarmbehebung und Vorbereitung Wartungsarbeiten spart wesentlich Zeit vor Ort. Eventuell erforderliche Ersatzteile für defekte Peripheriegeräte können im Vorfeld zum Einsatz vor Ort vorbereitet werden.
- Durch genaue CAD Daten (aus dem BIM-Modell) wird der Servicetechniker vor Ort geführt und so können Subunternehmer ohne Ortkenntnis diese Arbeiten übernehmen. Dies erlaubt deutlich mehr Flexibilität in der Einsatzplanung von Servicetechnikern.
- Durch die Unterstützung der multimedialen Möglichkeiten von einem Handy (Foto & Audio Funktion wird neben Texteingabe oder Auswahl des Testzustandes in der Inbetriebnahme App unterstützt) in Verbindung mit der Online Sicht der Datenpunkte in der App kann die Inbetriebnahme sehr einfach und schnell beim jeweiligen zu testenden Datenpunkt dokumentiert werden.
- Die Erstellung von Rechnungen über durchgeführte Leistungen vor Ort erfolgt durch die vor Ort gesammelten Daten deutlich schneller und vor allem für den Kunden transparenter weil der Umfang der Arbeiten durch Foto und aufgezeichnete Maßnahmen einfach erkennbar ist.
- Die Verknüpfung von Building Information Modeling (BIM) Daten bezüglich der eingebauten Peripheriegeräte mit Online-Sicht der Prozesswerte in Verbindung mit Verfahrensschritte für Installation, Service oder Alarmbehandlung wird auf ein mobiles Gerät übertragen und unterstützt den Servicetechniker vor Ort zielgerichtet bei seinen Tätigkeiten.
- Zudem wird durch die einfache Dokumentation mit Hilfe der multimedialen Funktionen eines mobilen Endgeräts eine Qualitätssicherung gewährleistet.

### Bezugszeichen

- SAT, IPS1, IPS2: Positionsbestimmungssystem
- POS: Positionsdaten
- B1, B2: Benutzer
- MG1, MG2: Mobiles Gerät
- ZS1, ZS2: Zentrale Stelle
- C1, C2: Cloud
- BIM: Gebäudeinformationsmodell
- DP, DP1, DPn: Datenpunkt
- KD: Konfigurationsdaten
- IC: Identifikationscode
- GMS: Gebäudemanagementsystem
- DB: Datenbank
- FG1, FG2, FG2': Feldgerät
- KV1 - KV4: Kommunikationsverbindung
- RSG1, RSG2: Regel- und Steuergerät
- GB1, GB2: Gebäude
- WiFi: Funknetz
- CA: Cloud Applikation
- App: App
- D1, D2: Display
- R1 - R3: Beziehung
- VS1 - VS5: Verfahrensschritt

## Patentansprüche

1. Verfahren zur Inbetriebnahme und/oder Wartung eines Regel- und Steuergerätes (RSG1, RSG2) für Feldgeräte (FG1, FG2) für eine Gebäudeautomatisierung,
(VS1) wobei zwischen dem Regel- und Steuergerät (RSG1, RSG2) und einem mobilen Kommunikationsendgerät (MG1, MG2) eines Benutzers (B1, B2) eine Kommunikationsverbindung (KV1, KV3) erstellt wird;
(VS2) wobei das mobile Kommunikationsendgerät (MG1, MG2) dazu eingerichtet ist, über die Kommunikationsverbindung (KV1, KV3) einen Identifikationscode (IC), aktuelle Konfigurationsdaten (KD) und aktuelle Datenpunkte (DP) des Regel- und Steuergerätes (RSG1, RSG2) abzufragen, wobei ein Datenpunkt (DP) den Zustand eines Parameters eines an das Regel- und Steuergerät (RSG1, RSG2) angeschlossenen Feldgerätes (FG1, FG2) repräsentiert;
(VS3) wobei das mobile Kommunikationsendgerät (MG1, MG2) weiter dazu eingerichtet ist, über eine weitere Kommunikationsverbindung (KV2, KV4) mit einer zentralen Stelle (ZS1, ZS2) zu kommunizieren, wobei in der zentralen Stelle (ZS1, ZS2) ein BIM-Modell (BIM) des entsprechenden Gebäudes (GB1, GB2) hinterlegt ist;
(VS4) wobei über den Identifikationscode (IC) die aktuellen Daten (KD, DP) des Regel- und Steuergerätes (RSG1, RSG2) mit den im BIM-Modell (BIM) hinterlegten Daten des Regel- und Steuergerätes (RSG1, RSG2) in Beziehung gesetzt werden; und
(VS5) wobei das mobile Kommunikationsendgerät (MG1, MG2) dazu eingerichtet ist, für den Benutzer (B1, B2), basierend auf den aktuellen Konfigurationsdaten (KD), den aktuellen Datenpunkten (DP), den im BIM-Modell (BIM) hinterlegten Daten des Regel- und Steuergerätes (RSG1, RSG2), dediziert Handlungsanweisungen (HA) bereitzustellen, wobei der Verbauungsort des Regel- und Steuergerätes (RSG1, RSG2) in einem Gebäude durch ein entsprechendes Positionssignal (POS) dem mobilen Kommunikationsendgerät (MG1, MG2) mitgeteilt wird,
**dadurch gekennzeichnet, dass**
das Positionssignal vom Regel- und Steuergerät ausgesendet wird,
wobei die dedizierten Handlungsanweisungen (HA) auf dem mobilen Kommunikationsendgerät (MG1, MG2) des Benutzers (B1, B2) als Folge von Anweisungen für an das Regel- und Steuergerät (RSG1, RSG2) angeschlossene Feldgeräte (FG1, FG2) abgearbeitet werden, wobei Messwerte von Sensoren, die datentechnisch am Regel- und Steuergerät (RSG1, RSG2) angeschlossen sind, als Ergebnis der Anweisungen für die Feldgeräte (FG1, FG2) durch das mobile Kommunikationsendgerät (MG1, MG2) erfasst werden, wobei, basierend auf den Messwerten der Sensoren, weitere Handlungsanweisungen (HA) für den Benutzer (B1, B2) auf dem mobilen Kommunikationsendgerät (MG1, MG2) bereitgestellt werden.

2. Verfahren nach Anspruch 1, wobei die dedizierten Handlungsanweisungen (HA) zusätzlich basierend auf einer Fehlermeldung des Regel- und Steuergerätes (RSG1, RSG2) bereitgestellt werden.

3. Verfahren nach einem der vorstehenden Ansprüche, wobei die dedizierten Handlungsanweisungen (HA) zusätzlich basierend auf einer Historienanalyse für das Regel- und Steuergerätes (RSG1, RSG2) bereitgestellt werden.

4. Verfahren nach einem der vorstehenden Ansprüche, wobei der Verbauungsort des Regel- und Steuergerätes (RSG1, RSG2) im mobilen Kommunikationsendgerät (MG1, MG2) und/oder im BIM-Modell (BIM) gespeichert wird.

5. Verfahren nach einem der vorstehenden Ansprüche, wobei durchgeführte Handlungsanweisungen (HA) und die jeweiligen Ergebnisse im BIM-Modell (BIM) gespeichert werden.

6. Verfahren nach einem der vorstehenden Ansprüche, wobei die zentrale Stelle (ZS1, ZS2) und das BIM-Modell (BIM) in einer Cloud-Infrastruktur (C1, C2) realisiert sind.

7. Verfahren nach einem der vorstehenden Ansprüche, wobei die dedizierten Handlungsanweisungen (HA) von der zentralen Stelle (ZS1, ZS2) automatisch basierend auf den jeweiligen aktuellen Konfigurationsdaten (KD), Datenpunkten (DP), und im BIM-Modell (BIM) hinterlegten Daten, aktualisiert bereitgestellt werden.

8. Anordnung zur Inbetriebnahme und/oder Wartung eines Regel- und Steuergerätes (RSG1, RSG2) für Feldgeräte (FG1, FG2) für eine Gebäudeautomatisierung,
wobei die Anordnung ein Regel- und Steuergerät (RSG1, RSG2), mindestens ein daran angeschlossenes Feldgerät (FG1, FG2), ein mobiles Kommunikationsendgerät (MG1, MG2) und eine zentrale Stelle (ZS1, ZS2) umfasst,
wobei zwischen dem Regel- und Steuergerät (RSG1, RSG2) und dem mobilen Kommunikationsendgerät (MG1, MG2) auf eine benutzerseitige Eingabe hin eine Kommunikationsverbindung (KV1, KV3) erstellbar ist;
wobei das mobile Kommunikationsendgerät (MG1, MG2) dazu eingerichtet ist, über die Kommunikationsverbindung (KV1, KV3) einen Identifikationscode (IC), aktuelle Konfigurationsdaten (KD) und aktuelle Datenpunkte (DP) des Regel- und Steuergerätes (RSG1, RSG2) abzufragen, wobei der Zustand eines Parameters eines Feldgerätes (FG1, FG2) durch einen Datenpunkt (DP) repräsentierbar ist;
wobei das mobile Kommunikationsendgerät (MG1, MG2) weiter dazu eingerichtet ist, über eine weitere Kommunikationsverbindung (KV2, KV4) mit der zentralen Stelle (ZS1, ZS2) zu kommunizieren, wobei in der zentralen Stelle (ZS1, ZS2) ein BIM-Modell (BIM) des entsprechenden Gebäudes (GB1, GB2) hinterlegbar ist;
wobei über den Identifikationscode (IC) die aktuellen Daten des Regel- und Steuergerätes (RSG1, RSG2) mit den im BIM-Modell (BIM) hinterlegten Daten des Regel- und Steuergerätes (RSG1, RSG2) in Beziehung setzbar sind; und
wobei das mobile Kommunikationsendgerät (MG1, MG2) dazu eingerichtet ist, für einen Benutzer (B1, B2), basierend auf den aktuellen Konfigurationsdaten (KD), den aktuellen Datenpunkten (DP), den im BIM-Modell (BIM) hinterlegten Daten des Regel- und Steuergerätes (RSG1, RSG2), dediziert Handlungsanweisungen (HA) bereitzustellen,
**dadurch gekennzeichnet, dass**
das Regel- und Steuergerät (RSG1, RSG2) dazu eingerichtet ist seinen Verbauungsort in einem Gebäude durch ein entsprechendes Positionssignal (POS) dem mobilen Kommunikationsendgerät (MG1, MG2) mitzuteilen,
wobei die dedizierten Handlungsanweisungen (HA) auf dem mobilen Kommunikationsendgerät (MG1, MG2) des Benutzers (B1, B2) als Folge von Anweisungen für Feldgeräte (FG1, FG2) abgearbeitet werden, wobei Messwerte von Sensoren, die datentechnisch am Regel- und Steuergerät (RSG1, RSG2) angeschlossen sind, als Ergebnis der Anweisungen für die Feldgeräte (FG1, FG2) durch das mobile Kommunikationsendgerät (MG1, MG2) erfasst werden, wobei, basierend auf den Messwerten der Sensoren, weitere Handlungsanweisungen (HA) für den Benutzer (B1, B2) auf dem mobilen Kommunikationsendgerät (MG1, MG2) bereitgestellt werden.

9. Anordnung nach Anspruch 8, wobei die Handlungsanweisungen (HA) als auf dem Regel- und Steuergerät (RSG1, RSG2) ablauffähiges Skript (SK) bereitstellbar sind.

## Claims

1. Method for commissioning and/or maintaining a regulation and control device (RSG1, RSG2) for field devices (FG1, FG2) for building automation,
(VS1) wherein a communication link (KV1, KV3) is produced between the regulation and control device (RSG1, RSG2) and a mobile communication terminal (MG1, MG2) of a user (B1, B2);
(VS2) wherein the mobile communication terminal (MG1, MG2) is designed to query, by way of the communication link (KV1, KV3), an identification code (IC), current configuration data (KD) and current data points (DP) of the regulation and control device (RSG1, RSG2), wherein a data point (DP) represents the state of a parameter of a field device (FG1, FG2) connected to the regulation and control device (RSG1, RSG2) ;
(VS3) wherein the mobile communication terminal (MG1, MG2) is further designed to communicate with a central point (ZS1, ZS2) by way of a further communication link (KV2, KV4), wherein a BIM model (BIM) of the corresponding building (GB1, GB2) is stored in the central point (ZS1, ZS2);
(VS4) wherein the current data (KD, DP) of the regulation and control device (RSG1, RSG2) is related to the data of the regulation and control device (RSG1, RSG2) stored in the BIM model (BIM) by way of the identification code (IC); and
(VS5) wherein the mobile communication terminal (MG1, MG2) is designed to provide dedicated handling instructions (HA) for the user (B1, B2), based on the current configuration data (KD), the current data points (DP), the data of the regulation and control device (RSG1, RSG2) stored in the BIM model (BIM), wherein the installation site of the regulation and control device (RSG1, RSG2) in a building is communicated by a corresponding position signal (POS) to the mobile communication terminal (MG1, MG2),
**characterised in that**
the position signal is emitted by the regulation and control device,
wherein the dedicated handling instructions (HA) are processed on the mobile communication terminal (MG1, MG2) of the user (B1, B2) as a series of instructions for field devices (FG1, FG2) connected to the regulation and control device (RSG1, RSG2), wherein measured values of sensors, which are connected to the regulation and control device (RSG1, RSG2) using data technology, are detected by the mobile communication terminal (MG1, MG2) as a result of the instructions for the field devices (FG1, FG2), wherein, on the basis of the measured values of the sensors, further handling instructions (HA) for the user (B1, B2) are provided on the mobile communication terminal (MG1, MG2).

2. Method according to claim 1, wherein the dedicated handling instructions (HA) are additionally provided based on an error message of the regulation and control device (RSG1, RSG2) .

3. Method according to one of the preceding claims, wherein the dedicated handling instructions (HA) are additionally provided based on a history analysis for the regulation and control device (RSG1, RSG2).

4. Method according to one of the preceding claims, wherein the building site of the regulation and control device (RSG1, RSG2) is stored in the mobile communication terminal (MG1, MG2) and/or in the BIM model (BIM).

5. Method according to one of the preceding claims, wherein implemented handling instructions (HA) and the respective results are stored in the BIM model (BIM).

6. Method according to one of the preceding claims, wherein the central point (ZS1, ZS2) and the BIM model (BIM) are realised in a cloud infrastructure (C1, C2).

7. Method according to one of the preceding claims, wherein the dedicated handling instructions (HA) are provided in updated form by the central point (ZS1, ZS2) automatically based on the respective current configuration data (KD), data points (DP), and data stored in the BIM model (BIM).

8. Arrangement for commissioning and/or maintaining a regulation and control device (RSG1, RSG2) for field devices (FG1, FG2) for building automation,
wherein the arrangement comprises a regulation and control device (RSG1, RSG2), at least one field device (FG1, FG2) connected thereto, a mobile communication terminal (MG1, MG2) and a central point (ZS1, ZS2),
wherein a communication link (KV1, KV3) can be produced between the regulation and control device (RSG1, RSG2) and the mobile communication terminal (MG1, MG2) on a user-side input;
wherein the mobile communication terminal (MG1, MG2) is designed to query an identification code (IC), current configuration data (KD) and current data points (DP) of the regulation and control device (RSG1, RSG2) by way of the communication link (KV1, KV3), wherein the state of a parameter of a field device (FG1, FG2) can be represented by a data point (DP);
wherein the mobile communication terminal (MG1, MG2) is further designed to communicate with the central point (ZS1, ZS2) via a further communication link (KV2, KV4), wherein a BIM model (BIM) of the corresponding building (GB1, GB2) can be stored in the central point (ZS1, ZS2);
wherein the current data of the regulation and control device (RSG1, RSG2) can be related to the data of the regulation and control device (RSG1, RSG2) stored in the BIM model (BIM) by way of the identification code (IC); and
wherein the mobile communication terminal (MG1, MG2) is designed to provide dedicated handling instructions (HA) for a user (B1, B2), based on the current configuration data (KD), the current data points (DP), the data of the regulation and control device (RSG1, RSG2) stored in the BIM model (BIM), **characterised in that**
the regulation and control device (RSG1, RSG2) is designed to communicate its building site in a building to the mobile communication terminal (MG1, MG2) by means of a corresponding position signal (POS),
wherein the dedicated handling instructions (HA) are processed on the mobile communication terminal (MG1, MG2) of the user (B1, B2) as a series of instructions for field devices (FG1, FG2), wherein measured values of sensors, which are connected to the regulation and control device (RSG1, RSG2) using data technology, are detected as a result of the instructions for the field device (FG1, FG2) by means of the mobile communication terminal (MG1, MG2), wherein, based on the measured values of the sensors, further handling instructions (HA) for the user (B1, B2) are provided on the mobile communication terminal (MG1, MG2).

9. Arrangement according to claim 8, wherein handling instructions (HA) can be provided as a script (SK) which can run on the regulation and control device (RSG1, RSG2).

## Revendications

1. Procédé de mise en service et/ou de maintenance d'un appareil de régulation et de commande (RSG1, RSG2) pour des appareils de terrain (FG1, FG2) pour l'automatisation de bâtiments,
(VS1) dans lequel on établit une liaison de communication (KV1, KV3) entre l'appareil de régulation et de commande (RSG1, RSG2) et un terminal de communication mobile (MG1, MG2) d'un utilisateur (B1, B2) ;
(VS2) dans lequel le terminal de communication mobile (MG1, MG2) est conçu pour scruter, via la liaison de communication (KV1, KV3), un code d'identification (IC), des données de configuration actuelles (KD) et des points de données actuels (DP) du dispositif de régulation et de commande (RSG1, RSG2), un point de données (DP) représentant l'état d'un paramètre d'un appareil de terrain (FG1, FG2) relié à l'appareil de régulation et de commande (RSG1, RSG2) ;
(VS3) dans lequel le terminal de communication mobile (MG1, MG2) est en outre conçu pour communiquer, via une liaison de communication (KV2, KV4) supplémentaire, avec un poste central (ZS1, ZS2), un modèle BIM du bâtiment correspondant (GB1, GB2) étant stocké dans le poste central (ZS1, ZS2) ;
(VS4) dans lequel, via le code d'identification (IC), les données actuelles (KD, DP) de l'appareil de régulation et de commande (RSG1, RSG2) sont mises en corrélation avec les données de l'appareil de commande (RSG1, RSG2) stockées dans le modèle BIM (BIM) ; et
(VS5) dans lequel le terminal de communication mobile (MG1, MG2) est configuré pour mettre à disposition à l'utilisateur (B1, B2) des instructions d'action (HA) de manière dédiée basées sur les données de configuration actuelles (KD), les points de données actuels (DP), les données du dispositif de commande (RSG1, RSG2) stockées dans le modèle BIM (BIM), dans lequel l'endroit de montage de l'appareil de régulation et de commande (RSG1, RSG2) dans un bâtiment est communiqué au terminal de communication mobile (MG1, MG2) grâce à un signal de position (POS) correspondant,
**caractérisé en ce que**
le signal de position est émis par l'appareil de régulation et de commande,
les instructions d'action dédiées (HA) étant exécutées sur le terminal de communication mobile (MG1, MG2) de l'utilisateur (B1, B2) par suite d'instructions destinées à des appareils de terrain (FG1, FG2) connectés à l'appareil de régulation et de commande (RSG1, RSG2), des valeurs mesurées par des capteurs reliés à l'appareil de régulation et de commande (RSG1, RSG2) en termes de données étant retenues comme résultat des instructions destinées aux appareils de terrain (FG1, FG2) par le terminal de communication mobile (MG1, MG2), des instructions d'action supplémentaires (HA) sont mises à disposition à l'utilisateur (B1, B2) sur le terminal de communication mobile (MG1, MG2) sur la base des valeurs mesurées par les capteurs.

2. Procédé selon la revendication 1, dans lequel les instructions d'action dédiées (HA) sont par ailleurs mises à disposition, sur la base d'un message d'erreur provenant de l'appareil de régulation et de commande (RSG1, RSG2).

3. Procédé selon l'une des revendications précédentes, dans lequel les instructions d'action dédiées (HA) sont en outre mises à disposition, sur la base d'une analyse d'historique, à l'appareil de régulation et de commande (RSG1, RSG2).

4. Procédé selon l'une des revendications précédentes, dans lequel l'endroit de montage de l'appareil de régulation et de commande (RSG1, RSG2) est stocké dans le terminal de communication mobile (MG1, MG2) et/ou dans le modèle BIM (BIM).

5. Procédé selon l'une des revendications précédentes, dans lequel les instructions d'action (HA) exécutées et les résultats correspondants sont stockés dans le modèle BIM (BIM).

6. Procédé selon l'une des revendications précédentes, dans lequel le point central (ZS1, ZS2) et le modèle BIM (BIM) sont implémentés dans une infrastructure cloud (C1, C2).

7. Procédé selon l'une des revendications précédentes, dans lequel les instructions d'action dédiées (HA) sont mises à disposition par le poste central (ZS1, ZS2) sous une forme mise à jour, basées automatiquement sur les données de configuration actuelles correspondantes (KD), les points de données (DP) et les données stockées dans le modèle BIM (BIM).

8. Dispositif de mise en service et/ou de maintenance d'un appareil de régulation et de commande (RSG1, RSG2) pour des appareils de terrain (FG1, FG2) destiné à l'automatisation de bâtiments,
le dispositif comportant un appareil de régulation et de commande (RSG1, RSG2), au moins un appareil de terrain (FG1, FG2) y relié, un terminal de communication mobile (MG1, MG2) et un poste central (ZS1, ZS2),
dans lequel une liaison de communication (KV1, KV3) peut être établie entre l'appareil de régulation et de commande (RSG1, RSG2) et un terminal de communication mobile (MG1, MG2) par suite d'une entrée effectuée par un utilisateur ;
dans lequel le terminal de communication mobile (MG1, MG2) est conçu pour scruter, via la liaison de communication (KV1, KV3), un code d'identification (IC), des données de configuration actuelles (KD) et des points de données actuels (DP) de l'appareil de régulation et de commande (RSG1, RSG2), un point de données (DP) pouvant représenter l'état d'un paramètre d'un appareil de terrain (FG1, FG2) ;
dans lequel le terminal de communication mobile (MG1, MG2) est en outre conçu pour communiquer, via une liaison de communication (KV2, KV4) supplémentaire, avec le poste central (ZS1, ZS2), un modèle BIM (BIM) du bâtiment correspondant (GB1, GB2) pouvant être stocké dans le poste central (ZS1, ZS2) ;
dans lequel les données actuelles de l'appareil de régulation et de commande (RSG1, RSG2) peuvent être corrélées, par l'intermédiaire du code d'identification (IC), avec les données de l'appareil de régulation et de commande (RSG1, RSG2) stockées dans le modèle BIM (BIM) ; et
dans lequel le terminal de communication mobile (MG1, MG2) est conçu pour mettre à disposition à un utilisateur (B1, B2) des instructions d'action (HA) dédiées basées sur les données de configuration actuelles (KD), les points de données (DP) actuels, les données de l'appareil de régulation et de commande (RSG1, RSG2) stockées dans le modèle BIM (BIM), **caractérisé en ce que**
l'appareil de régulation et de commande (RSG1, RSG2) est configuré pour communiquer son endroit de montage dans un bâtiment au terminal de communication mobile (MG1, MG2) via un signal de position (POS) correspondant,
les instructions d'action dédiées (HA) étant exécutées sur le terminal de communication mobile (MG1, MG2) de l'utilisateur (B1, B2) par suite d'instructions destinées à des appareils de terrain (FG1, FG2), des valeurs mesurées par des capteurs reliés à l'appareil de régulation et de commande (RSG1, RSG2) en termes de données, comme résultat des instructions destinées aux appareils de terrain (FG1, FG2), étant retenues par le terminal de communication mobile (MG1, MG2), des instructions d'action (HA) supplémentaires étant mises à disposition à l'utilisateur (B1, B2) sur le terminal de communication mobile (MG1, MG2), basées sur les valeurs mesurées par les capteurs.

9. Ensemble selon la revendication 8, dans lequel les instructions d'action (HA) peuvent être fournies sous forme d'un script (SK) exécutable sur l'appareil de régulation et de commande (RSG1, RSG2).
